(19) Europäisches Patentamt
European Patent Office
Office européen des brevets

(11) EP 4 101 904 A1

(12) EUROPEAN PATENT APPLICATION
published in accordance with Art. 153(4) EPC

(43) Date of publication:
**14.12.2022 Bulletin 2022/50**

(21) Application number: **21750820.9**

(22) Date of filing: **05.02.2021**

(51) International Patent Classification (IPC):
***C09D 175/06*** *(2006.01)* ***C09J 175/06*** *(2006.01)*
***C09D 11/102*** *(2014.01)* ***C08G 18/65*** *(2006.01)*
***C08G 18/73*** *(2006.01)* ***C08G 18/75*** *(2006.01)*
***C08G 18/76*** *(2006.01)* ***C09J 7/30*** *(2018.01)*

(52) Cooperative Patent Classification (CPC):
**C08G 18/65; C08G 18/73; C08G 18/75; C08G 18/76; C09D 11/102; C09D 175/06; C09J 7/30; C09J 175/06**

(86) International application number:
**PCT/JP2021/004434**

(87) International publication number:
**WO 2021/157726 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2020 JP 2020018696**

(71) Applicant: **TOYOBO CO., LTD.**
**Osaka-shi**
**Osaka 5300001 (JP)**

(72) Inventors:
- **MIEDA, Hiroyuki**
**Otsu-shi, Shiga 520-0292 (JP)**
- **OKAJIMA, Hiroki**
**Otsu-shi, Shiga 520-0292 (JP)**
- **SHIMENO, Katsuya**
**Otsu-shi, Shiga 520-0292 (JP)**

(74) Representative: **Müller-Boré & Partner Patentanwälte PartG mbB**
**Friedenheimer Brücke 21**
**80639 München (DE)**

# (54) POLYURETHANE RESIN WITH SATISFACTORY ADHESIVENESS TO BASE AND COMPOSITION INCLUDING SAME FOR USE IN ADHESIVE, INK BINDER, OR COATING MATERIAL

(57) The present invention aims to provide a composition for a film adhesive, an ink binder, or a coating agent based on a polyurethane resin having excellent heat resistance and surface hardness and good adhesiveness to various substrates.

According to the present invention, there is provided a composition for a film adhesive, an ink binder, or a coating agent, containing a polyurethane resin (X) and a crosslinking agent (Y), in which the polyurethane resin (X) contains a polycarbonate polyol (A), an organic diisocyanate (B), and a chain extender (C) as copolymerization components, characterized in that the glass transition temperature of the polyurethane resin (X) is 50°C or higher, that the polycarbonate polyol (A) contains 60 mol% or more of a specific structure, and that the composition contains 1 to 30 parts by mass of the crosslinking agent (Y) with respect to 100 parts by mass of the polyurethane resin (X).

EP 4 101 904 A1

## Description

### Technical Field

The present invention relates to a polyurethane resin based on a polycarbonate diol having a specific skeleton and an organic diisocyanate. The resin has good adhesiveness to various substrates. The present invention also relates to a composition for a film adhesive, an ink binder, or a coating agent using the resin.

### Background Art

Conventionally, a polyurethane resin is widely used as an adhesive for a substrate such as a polyethylene terephthalate film or a polycarbonate film. This is because the polyurethane resin can be designed to have a wide range of physical properties, forms, and curing modes and is also excellent in chemical properties such as chemical resistance (Patent Document 1).

### Prior Art Document

### Patent Document

Patent Document 1: Japanese Patent Application Laid-Open (JP-A) No. 2013-245312

### Disclosure of the Invention

### Problem that the Invention is to Solve

The above-mentioned adhesive contains a large amount of a linear aliphatic skeleton in a constituent component so as to make a coating film flexible and improve reactivity. However, due to the flexibility, there are problems of flow out and decomposition at the time of heat load, hot water treatment, and the like, which result in a decrease in adhesion and a decrease in surface hardness. In addition, the above-mentioned adhesive can exhibit adhesion to only a limited range of substrates. Accordingly, the substrate selectivity is a problem.

The present invention has been made to solve the problems of the prior art. That is, the present invention relates to a composition for a film adhesive, an ink binder, or a coating agent based on a polyurethane resin having excellent heat resistance and surface hardness and good adhesiveness to various substrates.

### Means for Solving the Problem

The present inventors have conducted various studies on the above factors and found that a composition based on a polyurethane resin mainly made from a polycarbonate diol having a specific skeleton is excellent in adhesiveness to various substrates, heat resistance, and surface hardness, leading to the present invention. Thus, the present invention has the following configurations.

A composition for a film adhesive, an ink binder, or a coating agent, containing a polyurethane resin (X) and a crosslinking agent (Y), in which the polyurethane resin (X) contains a polycarbonate polyol (A), an organic diisocyanate (B), and a chain extender (C) as copolymerization components, characterized in that the glass transition temperature of the polyurethane resin (X) is 50°C or higher, that the polycarbonate polyol (A) contains 60 mol% or more of a structure represented by General Formula (1) below, and that the composition contains 1 to 30 parts by mass of the crosslinking agent (Y) with respect to 100 parts by mass of the polyurethane resin (X).

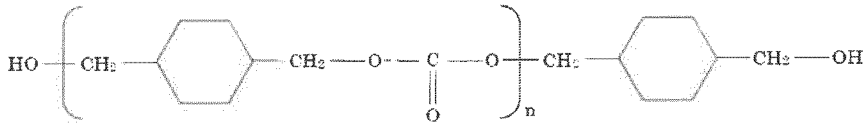

General Formula (1)

(In General Formula (1), n represents an integer of 1 to 20.)

The organic diisocyanate (B) is preferably isophorone diisocyanate, 4,4'-diphenylmethane diisocyanate, or hexamethylene diisocyanate. The chain extender (C) is preferably a glycol compound having 7 or less carbon atoms.

### Advantages of the Invention

The composition containing the polyurethane resin (X) of the present invention is excellent in adhesiveness to

various substrates and also excellent in the heat resistance, flow-out property, and surface hardness. Therefore, the composition is suitable for applications such as a film adhesive, a screen ink, an ink binder for decoration molding, and a coating agent for surface protection.

Best Mode for Carrying Out the Invention

The polyurethane resin (X) of the present invention containins a polycarbonate polyol (A), an organic diisocyanate (B), and a chain extender (C) as copolymerization components.

<Polycarbonate polyol (A)>

A polycarbonate polyol (A) used in the present invention is required to contain a structure represented by General Formula (1) below. When the total content of the polycarbonate polyol (A) is 100 mol%, it is necessary that the content of the structure represented by General Formula (1) is 60 mol% or more, preferably 70 mol% or more, more preferably 80 mol% or more, further preferably 90 mol% or more, particularly preferably 95 mol% or more, and the content may be even 100 mol%. By containing the structure represented by General Formula (1), flexibility can be imparted to the polyurethane resin (X), and excellent adhesiveness, heat resistance, and surface hardness can be exhibited.

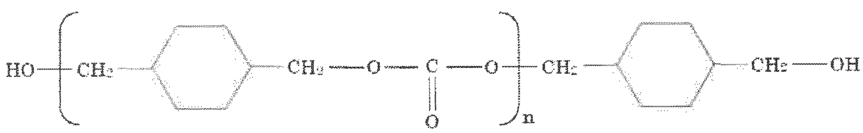

General Formula (1)

In General Formula (1), n represents an integer of 1 to 20. The n is preferably 2 or more, more preferably 3 or more, and further preferably 5 or more. Also, the n is preferably 18 or less, more preferably 15 or less, and further preferably 10 or less. Within the above range, the cohesive force of the polyurethane resin (X) to be obtained is improved, and excellent adhesiveness and heat resistance can be exhibited.

As to a polycarbonate polyol (A) other than the polycarbonate polyol having the structure represented by General Formula (1), an aliphatic polycarbonate polyol, an alicyclic polycarbonate polyol, or an aromatic polycarbonate polyol can be used. When the total amount of the polycarbonate polyols (A) is 100 mol%, the content of these polycarbonate polyols is preferably 40 mol% or less, more preferably 30 mol% or less, further preferably 20 mol% or less, furthermore preferably 10 mol% or less, particularly preferably 5 mol% or less, and the content may be even 0 mol%.

The aliphatic polycarbonate polyol is not particularly limited, and a polycarbonate diol obtained by a reaction of a linear or branched aliphatic glycol such as butanediol, pentanediol, hexanediol, polycaprolactone, polytetramethylene glycol, propylene glycol, and neopentyl glycol with a carbonate diester or the like can be used. The alicyclic polycarbonate polyol is not particularly limited, and a polycarbonate diol obtained by a reaction of an alicyclic glycol such as isosorbide with a carbonate diester or the like can be used. The aromatic polycarbonate diol is not particularly limited, and a polycarbonate diol obtained by a reaction of an aromatic glycol such as benzenedimethanol and naphthalenedimethanol with a carbonate diester or the like can be used. It is possible to use a polycarbonate diol formed of a raw material of one of the above-mentioned glycols or a combination thereof.

The number average molecular weight of the polycarbonate polyol (A) is preferably 300 to 2,500 and more preferably 500 to 1,500. By setting the number average molecular weight to the above-mentioned lower limit value or more, the cohesive force of the polyurethane resin (X) to be obtained is improved, and excellent adhesiveness and heat resistance can be exhibited. In addition, by setting the number average molecular weight to the above-mentioned upper limit value or less, the number of urethane bonds can be appropriately secured, and excellent adhesiveness and heat resistance can be exhibited.

The number average molecular weight of the polycarbonate diol (A) was calculated by the following formula.

$$\text{Number average molecular weight} = (56.1 \times 1000 \times \text{valence}) / \text{hydroxyl value [mg KOH/g]}$$

In the formula, the valence is the number of hydroxy groups in one molecule, and [mg KOH/g] is a unit of the hydroxyl value.

<Organic diisocyanate (B)>

Examples of the organic diisocyanate (B) used in the present invention include aliphatic diisocyanates such as tetramethylene diisocyanate, hexamethylene diisocyanate (HDI), 2-methyl-1,5-pentane diisocyanate, decamethylene diisocyanate, 3-methyl-1,5-pentane diisocyanate, and lysine diisocyanate; alicyclic diisocyanates such as isophorone diisocyanate (IPDI), hydrogenated tolylene diisocyanate, hydrogenated diphenylmethane diisocyanate, hydrogenated xylylene diisocyanate, hydrogenated tetramethylxylylene diisocyanate, and cyclohexyl diisocyanate; and aromatic diisocyanates such as 2,4-tolylene diisocyanate, 2,6-tolylene diisocyanate, 4,4'-diphenylmethane diisocyanate (MDI), 2,4'-diphenylmethane diisocyanate, 2,2'-diphenylmethane diisocyanate, 1,5-naphthylene diisocyanate, 1,4-naphthylene diisocyanate, o-phenylene diisocyanate, p-phenylene diisocyanate, m-phenylene diisocyanate, o-xylylene diisocyanate, m-xylylene diisocyanate, p-xylylene diisocyanate, tetramethylxylylene diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate. In addition, a mixture containing two or more of the above-mentioned organic diisocyanates, a urethane-modified product, an allophanate-modified product, a urea-modified product, a biuret-modified product, a uretdione-modified product, a uretimine-modified product, an isocyanurate-modified product, a carbodiimide-modified product, and the like of these organic diisocyanates are exemplified. As to the organic diisocyanate preferable in the present invention, hexamethylene diisocyanate, isophorone diisocyanate, and 4,4' -diphenylmethane diisocyanate are preferable. Isophorone diisocyanate is particularly preferable because the polyurethane resin (X) to be obtained has good solvent solubility, there is little possibility of gelation during production, and weather resistance and mechanical strength of the resin are excellent.

The copolymerization amount of the organic diisocyanate (B) is preferably 1 part by mass or more, more preferably 2 parts by mass or more, further preferably 5 parts by mass or more, and particularly preferably 10 parts by mass or more, with respect to 100 parts by mass of the polycarbonate polyol (A) . Also, the copolymerization amount of the organic diisocyanate (B) is preferably 60 parts by mass or less, more preferably 50 parts by mass or less, further preferably 45 parts by mass or less, and particularly preferably 40 parts by mass or less, with respect to 100 parts by mass of the polycarbonate polyol (A). Within the above range, the polyurethane resin (X) excellent in adhesiveness, heat resistance, and surface hardness can be obtained.

<Chain extender (C)>

The chain extender (C) used in the present invention is not particularly limited as long as it can extend the molecular chain of the polyurethane resin (X), and preferably has a group reactive with the organic diisocyanate (B) . The chain extender (C) is not particularly limited but is preferably a polyol compound, more preferably a glycol compound, from the viewpoint of gelation and reactivity at the time of production. The glycol compound may be any of an aliphatic glycol compound, an aromatic glycol compound, and an alicyclic glycol compound but is preferably an aliphatic glycol compound. Among them, a linear or branched aliphatic glycol compound having 10 or less carbon atoms is preferable, and a linear or branched aliphatic glycol compound having 7 or less carbon atoms is more preferable. Specific examples thereof include ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, neopentyl glycol, 2-ethyl-4-butyl-1,3-propanediol, diethylene glycol, dipropylene glycol, and neopentyl glycol. In the present invention, neopentyl glycol or 1,6-hexanediol is preferable from the viewpoint of reactivity and heat resistance.

The copolymerization amount of the chain extender (C) is preferably 1 part by mass or more, more preferably 2 parts by mass or more, further preferably 3 parts by mass or more, and particularly preferably 4 parts by mass or more, with respect to 100 parts by mass of the polycarbonate polyol (A) . Also, the copolymerization amount of the chain extender (C) is preferably 20 parts by mass or less, more preferably 15 parts by mass or less, further preferably 10 parts by mass or less, and particularly preferably 8 parts by mass or less, with respect to 100 parts by mass of the polycarbonate polyol (A). Within the above range, the polyurethane resin (X) excellent in adhesiveness, heat resistance, and surface hardness can be obtained.

<Polyurethane resin (X) >

The glass transition temperature of the polyurethane resin (X) of the present invention is required to be 50°C or higher. It is preferably 55°C or higher and more preferably 60°C or higher. When the glass transition temperature is equal to or higher than the lower limit value, it is possible to suppress a decrease in adhesiveness to the substrate due to a heat load and to suppress occurrence of flow out. Also, the glass transition temperature is preferably 120°C or less, more preferably 110°C or less, further preferably 100°C or less, and particularly preferably 95°C or less. When the glass transition temperature is equal to or lower than the upper limit value, it is possible to suppress a decrease in adhesiveness to the substrate.

The number average molecular weight of the polyurethane resin (X) of the present invention is preferably 5,000 to 50,000, more preferably 8,000 to 30,000 and further preferably 12,000 to 22,000. By setting the number average molecular weight to the above-mentioned lower limit value or more, it is possible to suppress a decrease in adhesiveness due to a decrease in cohesive force of the polyurethane resin (X) and a decrease in adhesiveness to a substrate due to a heat load. In addition, by setting the number average molecular weight to the above-mentioned upper limit value or less, an increase in the solution (varnish) viscosity of the polyurethane resin (X) is suppressed, and handling becomes easy.

When the polyurethane resin (X) is 100 mass%, the total amount of the polycarbonate polyol (A), the organic diisocyanate (B), and the chain extender (C) is preferably 80 mass% or more, more preferably 90 mass% or more, further preferably 95 mass% or more, particularly preferably 99 mass% or more and the amount may be even 100 mass%. Within the above range, excellent adhesiveness, heat resistance, and surface hardness can be exhibited.

As to a method for synthesizing the polyurethane resin (X) used in the present invention, the polycarbonate diol (A) having a specific skeleton, the organic diisocyanate (B), and the chain extender (C) may be collectively charged into a reaction vessel or they may be charged separately. Regarding the total of the hydroxyl values of the polycarbonate diol (A) and the chain extender (C) and the total of the isocyanate groups of the organic diisocyanate (B) in the system, it is preferable that the reaction is conducted at a functional group ratio of isocyanate groups/hydroxy groups of 1 or less. The ratio is more preferably 0.99 or less and further preferably 0.98 or less . In addition, the polyurethane resin (X) can be stably produced by conducting the reaction in the presence or absence of a solvent inert to isocyanate groups. Such solvent is not particularly limited, and examples thereof include an ester-based solvent (ethyl acetate, butyl acetate, ethyl butyrate, and the like), an ether-based solvent (dioxane, tetrahydrofuran, diethyl ether, and the like), a ketone-based solvent (cyclohexanone, methyl ethyl ketone, methyl isobutyl ketone, and the like), an aromatic hydrocarbon-based solvent (benzene, toluene, xylene, and the like), and a mixed solvent thereof. As to a reaction apparatus, not only a reaction can equipped with a stirring apparatus but also a mixing and kneading apparatus such as a kneader and a twin-screw extruder can be used.

In order to promote the urethanization reaction as described above, a catalyst used in a common urethanization reaction can be used. As to the catalyst, for example, a tin-based catalyst (trimethyltin laurate, dimethyltin dilaurate, trimethyltin hydroxide, dimethyltin dihydroxide, stannous octoate, and the like), a bismuth-based catalyst, a lead-based catalyst (lead oleate, lead-2-ethylhexoate, and the like), an amine-based catalyst (triethylamine, tributylamine, morpholine, diazabicyclooctane, and the like), or the like can be used. These catalysts may be used singly or in combination of two or more kinds thereof.

<Crosslinking agent (Y)>

A crosslinking agent (Y) used in the present invention is not particularly limited as long as it can react with the polyurethane resin (X) so as to crosslink the polyurethane resin (X). Preferably, the crosslinking agent (Y) is a compound that has two or more functional groups in one molecule. Examples of the functional groups include an isocyanate group, an epoxy group, an amino group, a methylol group, an alkoxymethyl group, an imino group, a metal chelate group, and an aziridinyl group. Specific examples of the compound include a polyfunctional isocyanate compound, a polyfunctional epoxy compound, a polyfunctional melamine compound, a metal crosslinking agent, and a polyfunctional aziridine compound.

The polyfunctional isocyanate compound is a compound having two or more isocyanate groups per molecule. Specific examples thereof include diisocyanate compounds such as tolylene diisocyanate (TDI), 4,4'-diphenylmethane diisocyanate (MDI), hexamethylene diisocyanate, ortho-xylylene diisocyanate, meta-xylylene diisocyanate, para-xylylene diisocyanate, 1,5-naphthalene diisocyanate, 1,4-naphthalene diisocyanate, 1,8-naphthalene diisocyanate, hydrogenated diphenylmethane diisocyanate, hydrogenated tolylene diisocyanate, hydrogenated xylylene diisocyanate, and isophorone diisocyanate; and polyisocyanate compounds prepared from these compounds. A urethane-modified product, an allophanate-modified product, a urea-modified product, a biuret-modified product, a uretdione-modified product, a uretimine-modified product, an isocyanurate-modif ied product, a carbodiimide-modified product, and the like of these organic diisocyanates are exemplified. These compounds may be used singly or in combination of two or more kinds thereof.

The polyfunctional epoxy compound is a compound having two or more epoxy groups per molecule . Specific examples include diglycidyl ethers of aliphatic diols such as 1,6-hexanediol, neopentyl glycol, and polyalkylene glycol; polyglycidyl ethers of aliphatic polyols such as sorbitol, sorbitan, polyglycerol, pentaerythritol, diglycerol, glycerol, and trimethylolpropane; polyglycidyl ethers of alicyclic polyols such as cyclohexanedimethanol; and diglycidyl esters or polyglycidyl esters of aliphatic or aromatic polyvalent carboxylic acids such as terephthalic acid, isophthalic acid, naphthalenedicarboxylic acid, trimellitic acid, adipic acid, and sebacic acid. In addition, examples thereof include diglycidyl ethers or polyglycidyl ethers of polyhydric phenols such as resorcinol, bis-(p-hydroxyphenyl)methane, 2,2-bis-(p-hydroxyphenyl)propane, tris-(p-hydroxyphenyl)methane, and 1,1,2,2-tetrakis(p-hydroxyphenyl)ethane; N-glycidyl derivatives of

amines such as N,N-diglycidyl aniline, N,N-diglycidyl toluidine, and N,N,N' ,N'-tetraglycidyl-bis-(p-aminophenyl)methane; triglycidyl derivatives of aminophel; triglycidyl tris(2-hydroxyethyl)isocyanurate; triglycidyl isocyanurate; ortho-cresol type epoxy; phenol novolac type epoxy; and bisphenol type polyfunctional epoxy compounds. These compounds may be used singly or in combination of two or more kinds thereof.

Examples of the metal crosslinking agent include metal chelate compounds in which acetylacetone, methyl acetoacetate, ethyl acetoacetate, ethyl lactate, methyl salicylate, or the like coordinates to a metal such as aluminum, zinc, cadmium, nickel, cobalt, copper, calcium, barium, titanium, manganese, iron, lead, zirconium, chromium, and tin. These compounds may be used singly or in combination of two or more kinds thereof.

The polyfunctional aziridine compound is a compound having two or more aziridine groups per molecule. Specific examples thereof include N,N'-hexamethylene-1,6-bis(1-aziridinecarboxamide), trimethylolpropane-tri-β-aziridinylpropionate, bisisophthaloyl-1-(2-methylaziridine), tri-1-aziridinylphosphone oxide, and N,N'-diphenylethane-4,4'-bis(1-aziridinecarboxamide). These compounds may be used singly or in combination of two or more kinds thereof.

The crosslinking agent (Y) is preferably a polyfunctional isocyanate compound. It is more preferably xylylene diisocyanate or a modified product thereof.

The content of the crosslinking agent (Y) is required to be 1 part by mass or more, with respect to 100 parts by mass of the polyurethane resin (X). The content of the crosslinking agent (Y) is preferably 2 parts by mass or more and more preferably 3 parts by mass or more, with respect to 100 parts by mass of the polyurethane resin (X). Also, the content of the crosslinking agent (Y) is required to be 30 parts by mass or less, preferably 25 parts by mass or less, and more preferably 20 parts by mass or less, with respect to 100 parts by mass of the polyurethane resin (X). Within the above range, excellent adhesiveness, heat resistance, and surface hardness can be exhibited.

<Composition for a film adhesive, an ink binder, or a coating agent >

The composition for a film adhesive, an ink binder, or a coating agent of the present invention (hereinafter also simply referred to as a composition) is a composition containing the polyurethane resin (X) and the crosslinking agent (Y), and is particularly suitable for film adhesive, ink binder, or coating agent applications. In the solid content of the composition, the content of the polyurethane resin (X) is preferably 60 mass% or more, more preferably 70 mass% or more, further preferably 80 mass% or more. Also, the content of the polyurethane resin (X) is preferably 98 mass% or less, more preferably 95 mass% or less, and further preferably 93 mass% or less. Within the above range, excellent adhesiveness, heat resistance, and surface hardness can be exhibited.

The composition of the present invention can be diluted with an organic solvent to form a varnish. Such organic solvent is not particularly limited, and examples thereof include an ester-based solvent (ethyl acetate, butyl acetate, ethyl butyrate, and the like), an ether-based solvent (dioxane, tetrahydrofuran, diethyl ether, and the like), a ketone-based solvent (cyclohexanone, methyl ethyl ketone, methyl isobutyl ketone, and the like), an aromatic hydrocarbon-based solvent (benzene, toluene, xylene, and the like), and a mixed solvent thereof. The content of the organic solvent is preferably 50 parts by mass or more, more preferably 100 parts by mass or more, and further preferably 200 parts by mass or more, with respect to 100 parts by mass of the polyurethane resin (X). Also, the content of the organic solvent is preferably 2000 parts by mass or less, more preferably 1000 parts by mass or less, and further preferably 500 parts by mass or less, with respect to 100 parts by mass of the polyurethane resin (X). Within the above range, the storage stability of the composition is good, and the coatability to the substrate is improved. It is also advantageous in terms of cost.

The composition may contain known additives such as an ultraviolet absorber and an antioxidant to such extent that the effect of the present invention is not impaired.

<Film adhesive>

The composition of the present invention is not only excellent in adhesiveness to all kinds of substrates including those made from polyesters and polycarbonates but also excellent in heat resistance. Accordingly, the composition of the present invention is useful for use as a precoating-type film adhesive in steel plates and the like. The film is not particularly limited, and examples thereof include a resin film and a metal film. That is, the composition of the present invention is suitable for use as an adhesive between a resin film and a resin film, an adhesive between a resin film and a metal film, or an adhesive between a resin film and a metal film. After the composition of the present invention is applied to one film and dried so as to form an adhesive layer, the other film can be bonded.

Examples of the resin film include films of polyester resin, polyamide resin, polyimide resin, polyamideimide resin, polycarbonate resin, liquid crystal polymer, polyphenylene sulfide, syndiotactic polystyrene, polyolefin-based resin, and fluorine-based resin. Among them, a polycarbonate resin film is preferable. The thickness of the resin film is not particularly limited but is preferably 1 μm or more, more preferably 3 μm or more, and further preferably 10 μm or more. Also, the thickness of the resin film is preferably 100 μm or less, more preferably 50 μm or less, and further preferably 20 μm or less.

Examples of the metal film include films of various metals such as SUS, copper, aluminum, iron, steel, zinc, and nickel, alloys thereof, plated products, and metals treated with other metals such as zinc and chromium compounds. The thickness of the metal film is not particularly limited but is preferably 1 μm or more, more preferably 3 μm or more, and further preferably 10 μm or more. Also, the thickness of the metal film is preferably 50 μm or less, more preferably 30 μm or less, and further preferably 20 μm or less.

The thickness of the adhesive layer after drying is not particularly limited but is preferably 1 μm or more, more preferably 2 μm or more, and further preferably 5 μm or more. Also, the thickness of the adhesive layer after drying is preferably 20 μm or less, more preferably 15 μm or less, and further preferably 5 μm or less. Within the above range, adhesiveness and heat resistance become excellent.

<Ink binder>

The composition of the present invention is not only excellent in adhesiveness to all kinds of substrates including those made from polyesters and polycarbonates but also excellent in heat resistance. Accordingly, the composition of the present invention can suppress the flow out of a coating film, so that the composition is useful for ink binder applications. It is particularly useful for screen inks and ink binders for decoration molding.

<Coating agent>

The composition of the present invention is not only excellent in adhesiveness to a metal substrate such as aluminum but also excellent in surface hardness. Accordingly, the composition of the present invention is useful for coating agent applications. In particular, it is useful for a coating agent for surface protection of inks and components inside and outside an automobile.

Examples

Hereinafter, the present invention will be described with reference to examples, but the present invention is not limited to the examples at all. Unless otherwise specified, in the examples, "part" represents part by mass, and "%" represents a percentage by mass. Each measurement item was measured according to the following method.

<Composition of polyurethane resin (X)>

Using a 400 MHz $^1$H-nuclear magnetic resonance spectrometer (NMR), the molar ratio of monomer components constituting the polyurethane resin (X) was determined. As to a solvent, deuterated chloroform was used.

<Number average molecular weight Mn>

After 4 mg of a sample (polycarbonate polyol (A) or polyurethane resin (X)) was dissolved in 4 ml of tetrahydrofuran (with 5 mM tetrabutylammonium chloride added), the resulting solution was filtered through a 0.2-μm membrane filter so as to provide a sample solution. The sample solution was analyzed by gel permeation chromatography. The measurement was performed at a flow rate of 1 mL/min and a column temperature of 40°C using TOSOH HLC-8220 as an apparatus and a differential refractometer as a detector. Monodisperse polystyrene was used as a molecular weight standard. The number average molecular weight was calculated in terms of standard polystyrene by omitting a portion corresponding to a molecular weight of less than 1,000.

<Glass transition temperature Tg>

From the measurement result of the temperature dependence of dynamic viscoelasticity, the temperature at the refractive point of the storage elastic modulus (E') was taken as the glass transition temperature. The obtained polyurethane resin (X) solution was applied to a polypropylene film (P2161 manufactured by Toyobo Co., Ltd., thickness 50 μm) at a wet film thickness (thickness before drying) of 200 μm and heated at 120°C for 1 hour so as to volatilize (dry) the solvent. Then, the film after drying the polyurethane resin (X) solution was peeled off the polypropylene film so as to provide a sample film of the polyurethane resin (X). The glass transition temperature of the sample film was measured. A dynamic viscoelasticity measuring device DVA-220 manufactured by IT Keisoku Seigyo KK was used as an apparatus so as to measure the temperature dependence at 0°C to 150°C (4°C/min, 10 HHz) .

Production example of polyurethane resin (U1)

A reaction vessel equipped with a thermometer, a stirrer, a reflux condenser, and a distillation tube was charged with 100 parts of UC-100 (polycarbonate diol manufactured by Ube Industries, Ltd.), 5 parts of neopentyl glycol, and 204 parts of methyl ethyl ketone (MEK). After dissolution, 31 parts of isophorone diisocyanate was added and stirred so as to provide a homogeneous solution. Thereafter, 0.5 part of BiCAT 8210 (manufactured by The Shepherd Chemical Company) was added as a catalyst, and the mixture was allowed to react at 75°C for 5 hours. After the mixture was allowed to sufficiently react, 113 parts of methyl ethyl ketone (MEK) was charged, and the mixture was stirred so as to provide a solution of a polyurethane resin (U1) having a desired solid content concentration (NV) of 30 mass%. The properties of the polyurethane resin (U1) thus obtained are shown in Table 1.

Production examples of polyurethane resins (U2) to (U11)

Polyurethane resins (U2) to (U11) were obtained in the same manner as in the production example of the polyurethane resin (U1) except that the type and blending ratio of the raw materials were changed. The properties of polyurethane resins (U2) to (U11) are shown in Table 1.

[Table 1]

| Polyurethane resin | | | U1 | U2 | U3 | U4 | U5 | U6 | U7 | U8 | U9 | U10 | U11 |
|---|---|---|---|---|---|---|---|---|---|---|---|---|---|
| Resin composition | polyol component (mass ratio) | UC-100 | 100 | 100 | 100 | 100 | 100 | 100 | | | | | |
| | | UH-100 | | | | | | | | 100 | | | |
| | | PH-100 | | | | | | | | | 100 | | |
| | | UM-90 (3/1) | | | | | | | 100 | | | | 100 |
| | | UM-90 (1/1) | | | | | | | | | | 100 | |
| | organic diisocyanate compound (mass ratio) | IPDI | 31 | 30 | | | 29 | 36 | 31 | 31 | 31 | 31 | 29 |
| | | MDI | | | 33 | | | | | | | | |
| | | HDI | | | | 35 | | | | | | | |
| | chain extender (mass ratio) | NPG | 5 | | 5 | 5 | 5 | 7 | 5 | 5 | 5 | 5 | 5 |
| | | HD | | 5 | | | | | | | | | |
| Physical properties | solvent | | MEK | MEK | MEK | MEK | MEK | MEK | MEK | MEK | MEK | MEK | MEK |
| | NV (%) | | 30 | 30 | 30 | 30 | 30 | 30 | 30 | 30 | 30 | 30 | 30 |
| | number average molecular weight | | 18000 | 16000 | 15000 | 20000 | 12000 | 30000 | 19000 | 18000 | 17000 | 20000 | 12000 |
| | Tg (°C) | | 78 | 67 | 105 | 55 | 76 | 83 | 61 | 30 | 32 | 45 | 49 |

Examples 1 to 11 and Comparative Examples 1 to 4

A laminate was produced using the polyurethane resins (U1) to (U11). Initial adhesive strength (adhesiveness), heat resistance, and pencil hardness thereof were evaluated. In Examples 1 to 10, 1 to 30 parts by mass (in terms of solid content) of D-110 N (manufactured by Mitsui Chemicals, Inc., solid content concentration: 75 mass%) as a crosslinking agent was added to 100 parts by mass (in terms of solid content) of the polyurethane resin, and the evaluation was performed.

Production of laminate

A solution of a polyurethane resin (P1) was applied to a polycarbonate film (EC105, 0.5 mm, manufactured by Sumitomo Bakelite Co., Ltd.) with a bar coater so that the dry film thickness (film thickness after drying) was 5 μm, and heating was performed at 120°C for 3 minutes so as to volatilize (dry) the solvent. Next, a polycarbonate film (EC105, 0.5 mm, manufactured by Sumitomo Bakelite Co., Ltd.) was compression-bonded (dry lamination) to the polyurethane resin surface of the film using a dry laminator. The dry lamination was performed at a roll temperature of 120°C, a roll load of 3 kg/cm, and a crimped object speed of 1 m/min. Next, aging was performed at 80°C for 1 hour so as to provide a laminate.

Initial adhesive strength (adhesiveness) test

The laminate was cut into a strip shape having a width of 15 mm, peeled (T-peel, tensile speed 100 mm/min) with Tensilon (registered trademark) (UTM-IV manufactured by Toyo Sokki Co., Ltd.), and the state of peeling was observed so as to evaluate the adhesiveness. The evaluation results are shown in Table 2.

(Evaluation)

○: Adhesive cohesive failure or material failure occurred.
Δ: Interface peeling occurred and adhesion strength was 10 N/15 mm.
×: Adhesion strength was lower than 10 N/15 mm.

Heat resistance test

The laminate was treated (left standing) at 105°C for 300 hours, and the adhesiveness was evaluated in the same manner as in the initial adhesive strength test.

(Evaluation)

∞: No lifting occurred, resulting in adhesive cohesive failure or material failure.
◦: No lifting occurred, cohesive peeling occurred mainly, but interface peeling occurred partially.
Δ: No lifting occurred, and interface peeling occurred.
×: Lifting occurred.

Pencil hardness test

The laminate was produced on a tinplate (JIS G3303 (2017)) in the same manner and evaluated by a pencil hardness test method conforming to the JIS standard (K5600-5-4 (1999)) .

(Evaluation)

∞: 2H or more
o: Less than 2H and H or more
Δ: Less than H and F or more

x: Less than F

[Table 2]

| | | | Example (1) | Example (2) | Example (3) | Example (4) | Example (5) | Example (6) | Example (7) | Example (8) | Example (9) | Example (10) |
|---|---|---|---|---|---|---|---|---|---|---|---|---|
| blending | polyurethane resin (in terms of solid content) | U1 | 100 | | | | | | | 100 | 100 | 100 |
| | | U2 | | 100 | | | | | | | | |
| | | U3 | | | 100 | | | | | | | |
| | | U4 | | | | 100 | | | | | | |
| | | U5 | | | | | 100 | | | | | |
| | | U6 | | | | | | 100 | | | | |
| | | U7 | | | | | | | 100 | | | |
| | | U8 | | | | | | | | | | |
| | | U9 | | | | | | | | | | |
| | | U10 | | | | | | | | | | |
| | | U11 | | | | | | | | | | |
| | crosslinking agent (in terms of solid content) | D-110N | 20 | 20 | 20 | 20 | 20 | 20 | 20 | 1 | 10 | 30 |
| performance | adhesiveness | | ∘ | ∘ | ∘ | ∘ | ∘ | ∘ | Δ | ∘ | ∘ | ∘ |
| | heat resistance | | ∞ | ∘ | ∘ | ∘ | ∞ | ∞ | Δ | ∘ | ∞ | ∞ |
| | pencil hardness | | ∞ | ∘ | ∘ | ∘ | ∞ | ∘ | Δ | ∘ | ∞ | ∞ |

(continued)

| | | | Comparative Example (1) | Comparative Example (2) | Comparative Example (3) | Comparative Example (4) | Comparative Example (5) |
|---|---|---|---|---|---|---|---|
| blending | polyurethane resin (in terms of solid content) | U1 | | | | | 100 |
| | | U2 | | | | | |
| | | U3 | | | | | |
| | | U4 | | | | | |
| | | U5 | | | | | |
| | | U6 | | | | | |
| | | U7 | | | | | |
| | | U8 | 100 | | | | |
| | | U9 | | 100 | | | |
| | | U10 | | | 100 | | |
| | | U11 | | | | 100 | |
| | crosslinking agent (in terms of solid content) | D-110N | 20 | 20 | 20 | 20 | 0 |
| performance | adhesiveness | | × | × | Δ | Δ | ∘ |
| | heat resistance | | × | × | × | × | ∘ |
| | pencil hardness | | Δ | Δ | Δ | Δ | × |

The compounds used in Tables 1 and 2 are as follows.

UC-100: Polycarbonate diol manufactured by Ube Industries, Ltd., number average molecular weight = 1000, content ratio of structure represented by General Formula (1) in polycarbonate polyol (A): 100 mol%
UH-100: Polycarbonate diol manufactured by Ube Industries, Ltd., number average molecular weight = 1000, content ratio of structure represented by General Formula (1) in polycarbonate polyol (A): 0 mol%
PH-100: Polycarbonate diol manufactured by Ube Industries, Ltd., number average molecular weight = 1000, content ratio of structure represented by General Formula (1) in polycarbonate polyol (A): 0 mol%
UM-90(3/1): Polycarbonate diol manufactured by Ube Industries, Ltd. based on 1,4-cyclohexanedimethanol and 1, 6-hexanediol, number average molecular weight = 900, content ratio of structure represented by General Formula (1) in polycarbonate polyol (A): 75 mol%
UM-90(1/1): Polycarbonate diol manufactured by Ube Industries, Ltd. based on 1,4-cyclohexanedimethanol and 1, 6-hexanediol, number average molecular weight = 900, content ratio of structure represented by General Formula (1) in polycarbonate polyol (A): 50 mol%
D-110N: Trimethylolpropane adduct of meta-xylylene diisocyanate manufactured by Mitsui Chemicals, Inc., solid content ratio: 75 mass%
IPDI: isophorone diisocyanate
MDI: diphenylmethane diisocyanate
HDI: hexamethylene diisocyanate
NPG: neopentyl glycol
HD: 1,6-hexanediol

## Claims

1. A composition for a film adhesive, an ink binder, or a coating agent, containing a polyurethane resin (X) and a crosslinking agent (Y), in which the polyurethane resin (X) contains a polycarbonate polyol (A), an organic diisocyanate (B), and a chain extender (C) as copolymerization components, **characterized in that** the glass transition temperature of the polyurethane resin (X) is 50°C or higher, that the polycarbonate polyol (A) contains 60 mol% or more of a structure represented by General Formula (1) below, and that the composition contains 1 to 30 parts by mass of the crosslinking agent (Y) with respect to 100 parts by mass of the polyurethane resin (X).

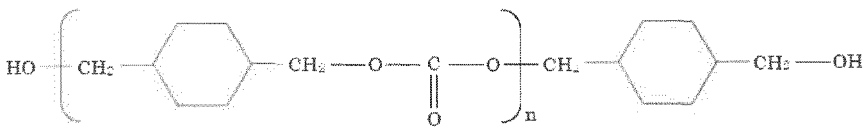
General Formula (1)

(In General Formula (1), n represents an integer of 1 to 20.)

2. The composition for a film adhesive, an ink binder, or a coating agent according to claim 1, in which the organic diisocyanate (B) is isophorone diisocyanate, 4,4'-diphenylmethane diisocyanate, or hexamethylene diisocyanate.

3. The composition for a film adhesive, an ink binder, or a coating agent according to claim 1 or 2, in which the chain extender (C) is a glycol compound having 7 or less carbon atoms.

## INTERNATIONAL SEARCH REPORT

International application No. PCT/JP2021/004434

**A. CLASSIFICATION OF SUBJECT MATTER**

C09D 175/06(2006.01)i; C09J 175/06(2006.01)i; C09D 11/102(2014.01)i; C08G 18/65(2006.01)i; C08G 18/73(2006.01)i; C08G 18/75(2006.01)i; C08G 18/76(2006.01)i; C09J 7/30(2018.01)i

FI: C09J7/30; C08G18/76 057; C08G18/75 010; C08G18/73; C08G18/65 011; C09J175/06; C09D11/102; C09D175/06

According to International Patent Classification (IPC) or to both national classification and IPC

**B. FIELDS SEARCHED**

Minimum documentation searched (classification system followed by classification symbols)

C09D175/06; C09J175/06; C09D11/102; C08G18/65; C08G18/73; C08G18/75; C08G18/76; C09J7/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-78274 A (UBE INDUSTRIES, LTD.) 23 April 2015 (2015-04-23) claim 1, paragraphs [0135], [0154], [0166], synthesis example 4, examples 2-5, tables 1-2 | 1-3 |
| X | JP 2012-52103 A (UBE INDUSTRIES, LTD.) 15 March 2012 (2012-03-15) claim 1, paragraphs [0001], [0097], examples 3-5, comparative example 3 | 1-3 |
| X | JP 2018-62538 A (UBE INDUSTRIES, LTD.) 19 April 2018 (2018-04-19) claim 1, paragraphs [0001], [0126], examples 1-5, comparative example 1, table 1 | 1-3 |
| X | JP 2018-177861 A (UBE INDUSTRIES, LTD.) 15 November 2018 (2018-11-15) claim 1, paragraph [0103], example 2, table 1 | 1-3 |

☒ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 06 April 2021 (06.04.2021) | 20 April 2021 (20.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/004434

C (Continuation). DOCUMENTS CONSIDERED TO BE RELEVANT

| Category* | Citation of document, with indication, where appropriate, of the relevant passages | Relevant to claim No. |
|---|---|---|
| X | JP 2016-204465 A (UBE INDUSTRIES, LTD.) 08 December 2016 (2016-12-08) claim 1, paragraph [0145], examples 1-11, comparative example 2, tables 2-3 | 1-3 |
| X | JP 2006-27 4258 A (SHOWA DENKO KABUSHIKI KAISHA) 12 October 2006 (2006-10-12) claim 1, paragraphs [0001]-[0002], [0024], [0036], reference example 2, example 2, table 1 | 1-3 |
| P, X | WO 2020/116109 A1 (TOYOBO CO., LTD.) 11 June 2020 (2020-06-11) claim 1-4, paragraph [0010], examples | 1-3 |

Form PCT/ISA/210 (continuation of second sheet) (January 2015)

**INTERNATIONAL SEARCH REPORT**
Information on patent family members

International application no.
PCT/JP2021/004434

| Patent Documents referred in the Report | Publication Date | Patent Family | Publication Date |
|---|---|---|---|
| JP 2015-78274 A | 23 Apr. 2015 | (Family: none) | |
| JP 2012-52103 A | 15 Mar. 2012 | (Family: none) | |
| JP 2018-62538 A | 19 Apr. 2018 | (Family: none) | |
| JP 2018-177861 A | 15 Nov. 2018 | (Family: none) | |
| JP 2016-204465 A | 08 Dec. 2016 | (Family: none) | |
| JP 2006-274258 A | 12 Oct. 2006 | US 2008/0188625 A1 claim 1, paragraphs [0002]-[0003], [0076], [0092], examples 2, 24, table 1 | |
| WO 2020/116109 A1 | 11 Jun. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013245312 A